(19) **Europäisches Patentamt**

**European Patent Office**

**Office européen des brevets**

(11) **EP 1 390 238 B1**

(12) **EUROPÄISCHE PATENTSCHRIFT**

(45) Veröffentlichungstag und Bekanntmachung des Hinweises auf die Patenterteilung:
**09.08.2006 Patentblatt 2006/32**

(21) Anmeldenummer: **02742755.8**

(22) Anmeldetag: **16.05.2002**

(51) Int Cl.:
**B60R 21/04** *(2006.01)*

(86) Internationale Anmeldenummer:
**PCT/DE2002/001765**

(87) Internationale Veröffentlichungsnummer:
**WO 2002/092398 (21.11.2002 Gazette 2002/47)**

(54) **STOSSABSORBIERENDES VERKLEIDUNGSTEIL FÜR DEN INNENRAUM VON KRAFTFAHRZEUGEN**

SHOCK-ABSORBENT LINING ELEMENT FOR THE INTERIOR OF A VEHICLE

ELEMENT D'HABILLAGE AMORTISSANT LES CHOCS, DESTINE A L'HABITACLE DE VEHICULES AUTOMOBILES

(84) Benannte Vertragsstaaten:
**AT BE CH CY DE DK ES FI FR GB GR IE IT LI LU MC NL PT SE TR**

(30) Priorität: **16.05.2001 DE 10124036**

(43) Veröffentlichungstag der Anmeldung:
**25.02.2004 Patentblatt 2004/09**

(73) Patentinhaber: **Faurecia Innenraum Systeme GmbH**
**76767 Hagenbach (DE)**

(72) Erfinder:
• **ZIMMERMAN, Eric**
**34125 Kassel (DE)**

• **MANZKE, Friedhelm**
**34127 Kassel (DE)**
• **PRATSCH, Thomas**
**93336 Altmannstein (DE)**

(74) Vertreter: **Kühn, Armin et al**
**Viering, Jentschura & Partner**
**Patent- und Rechtsanwälte**
**Steinsdorfstrasse 6**
**80538 München (DE)**

(56) Entgegenhaltungen:
**US-A- 5 181 759**

**Beschreibung**

Die Erfindung betrifft ein Verkleidungsteil zur Anordnung an der dem Innenraum zugewandten Seite eines Karosserieteils eines Kraftfahrzeugs gemäß dem Oberbegriff des Patentanspruches 1. Die Erfindung betrifft insbesondere eine Armlehne für Kraftfahrzeuge, die beispielsweise in Innenverkleidungen von Türen oder feststehenden Seitenteilen verwendet werden können.

Fahrzeugtüren von Kraftfahrzeugen bestehen üblicherweise aus einem Aussen- und einem Innenblech, die miteinander verbunden sind und die Aussenseite des Bauteiles bilden sowie einer dekorativen Innenverkleidung als Abschluss zur Fahrgastseite hin. Zur Verstärkung der Türen im Hinblick auf Verbesserung des Seitenaufprallverhaltens ist oft in etwa mittlerer Höhe ein Verstärkungsprofil an der Innenseite des Aussenbleches angeordnet. Zwischen Aussen- und Innenseite sind Funktionselemente wie zum Beispiel Fensterhebersysteme, Lautsprecher, Schlösser und bedarfsweise weitere Elemente angeordnet, die häufig auf einem eigenen Modulträger montiert sind. Diese Funktionselemente sind der Vollständigkeit halber erwähnt, spielen jedoch im Hinblick auf die Erfindung keine Rolle.

Die Innenverkleidung trägt üblicherweise eine Armauflage, die aus einem starren Träger, einer darüberliegenden, relativ harten Schaumschicht, die eine angenehme Haptik bereitet, und einer zum Fahrgastraum hin gewandten, abschliessenden Dekorschicht aus Leder, Kunstleder, Textil oder Kunststoff-Folie besteht. Die Armlehne ragt oft über die Fläche der Innenverkleidung hinaus in den Fahrgastraum, in Höhe etwa zwischen Beckenrand und unteren Rippen des Fahrzeuginsassen, hinein. Kommt es nun zu einem Seitenaufprall, wird die gesamte Fahrzeugtür in Richtung Fahrzeuginsasse eingedrückt. Auch die Verstärkungsprofile können das Eindrücken nicht vollständig verhindern. Hierbei besteht, auch bei Vorhandensein von sogenannten Sidebags, die sich aus der Innenverkleidung oder aus dem Sitz heraus entfalten können, grosse Gefahr, dass die über die Fläche der Seitenverkleidung hervorstehende Armlehne in den genannten Bereich des Oberkörpers des Fahrzeuginsassen eindrückt und mitunter erhebliche Verletzungen verursacht. Diese Verletzungsgefahr wird deutlich verringert, wenn die Kraft, mit der die Armlehne während des Deformierens auf den Körper drückt, 1000 N nicht überschreitet. Dies entspricht auch den neueren Forderungen der Automobilhersteller.

Bekannt sind Konstruktionen für verformbare Armauflagen, die z. B. aus einem Kunststoffträgermaterial bestehen und die Sollbruchstellen im Trägermaterial enthalten. Nachteilig hieran ist, dass durch das Brechen des Trägermaterials, zumal wenn es spröde ist, scharfe Kanten und Splitter entstehen können, die durch das Dekormaterial dringen können und somit zusätzliche Verletzungsgefahr bergen. Es hat sich weiterhin gezeigt, dass das Bruchverhalten dieser Sollbruchstellen unerwünschter Weise stark temperaturabhängig ist.

Konstruktionen mit lammellenartig ineinanderschiebbaren Trägerteilen haben sich ebenfalls als ungeeignet erwiesen. Ist der Träger aus einzelnen, lose ineinandergreifenden Lamellen zusammengesetzt, so bietet er nicht die erforderliche Stabilität, die von einer Trägerschicht für Armauflagen gefordert wird. Das Verbinden der Trägerschicht mit der Dekorschicht mittels eines bekannten Schaumkaschierungsverfahrens mit z.B. Polyurethan, welches ein preiswertes, hierfür oft verwendetes Verfahren darstellt, zeigt nicht den gewünschten Erfolg. Der Schaum würde zwar die Lamellen stabilisieren, im Verformungsfalle auch Energie aufnehmen, die er jedoch auf Grund seiner Elastizität aber auch wieder abgibt. Eine Verringerung der Kraft auf den Fahrzeuginsassen wird hierduch nicht erreicht. Sind die Lamellen mit Stegen als Sollbruchstellen verbunden, was die Stabilität des Trägers erhöht, ergeben sich die oben genannten Nachteile bezüglich Sollbruchstellen zusätzlich.

Konstruktionen mit senkrecht zur Verformungsrichtung gestellten offenen Waben würden eine sehr gute Energieabsorption ermöglichen. Sie sind jedoch ungeeignet, da sie im Schaumkaschierungsverfahren entweder durch in die Waben eindringenden elastischen Schaum oder durch das Schaumeindringen verhindernde Abdeckschichten ihre guten Verformungseigenschaften verlieren. Bezüglich des elastischen Schaumes im Falle des Eindringens in die Waben besteht der gleiche Zustand wie bei den schaumüberdeckten Lamellen.

Aus der US 5 181 759A, die dem Oberbegriff des Anspruchs 1 entspricht, der DE-AS 1 267 116 und der DE 41 40 706 A1 sind Armlehnen bekannt, die jedoch die aufgrund einer äußeren Kraft übertragene Energie nicht ausreichend absorbieren.

Nach der DE 30 26 736 A1 wird eine Verformung einer Armlehne dadurch erreicht, dass die Wandungen eines abstehenden Bereichs zwecks Bildung von Sollbruchstellen oder Sollknickstellen Zonen verringerter Wanddicke aufweisen. Dadurch werden Sollbruchstellen erzeugt, so dass bei einem Aufprall auf einen abstehenden Bereich dieser zusammenbricht, so dass sich die Mantelelemente zwischen den Kerben ineinander schachteln. Aus der DE 93 01 022 U ist ein Innenverkleidungselement für Innenflächen von Fahrzeugen unter Verwendung von Holzfaserwerkstoffen bekannt.

Die Erfindung stellt sich die Aufgabe, eine Armauflage anzugeben, die sich im Falle des Auftreffens auf den Körper des Fahrzeuginsassen derart verformt, dass die durch sie auf den Körper des Fahrzeuginsassen im Bereich etwa zwischen Beckenrand und unteren Rippen ausgeübte Kraft unter dem kritischen Wert von 1000 N bleibt aber auch die geforderte Abstützkraft auf die Oberseite der Armauflage tragen kann.

Die Aufgabe wird erfindungsgemäss durch die Merkmale des kennzeichnenden Teiles des Anspruches 1 gelöst. Die Unteransprüche geben vorteilhafte Weiterbildungen der erfindungsgemässen Armlauflage an.

Vorteilhaft an der Erfindung ist das einfache Herstellverfahren der efindungsgemässen Armauflage. Gegenüber den heute für die Herstellung benötigten Werkzeuge müssen zwar Konturänderungen durchgeführt werden, was problemlos möglich ist; es werden jedoch in aller Regel keine zusätzlichen aufwendigen, beweglichen Teile im Werkzeug, insbesondere das Presswerkzeug für den Träger betreffend, benötigt Zusätzliche Bauteile im Vergleich zu herkömmlichen Konstruktionen in oder an der Armlehne werden nicht benötigt.

Weiterhin vorteilhaft ist, dass Sollbruchstellen im Trägermaterial nicht benötigt werden, die keinen wesentlichen Beitrag zur Energieabsorption liefern und darüberhinaus noch die Gefahr in sich bergen, dass scharfe Endteile oder Splitterteile Schaum und Dekorschicht durchtrennen und so noch ein erhöhtes Verletzungsrisiko für den Fahrzeuginsassen darstellen.

Aufzehrung von Aufprallenergie wird bei der erfindungsgemäßen Armlehne durch Verformung des Trägers erreicht. Besonders vorteilhaft hat sich hierbei ergeben, dass beim Verformen der Armauflage keine elastischen Schaumteile durch Träger und / oder Dekormaterial eingeklemmt werden.

Entsprechend den Erfordernissen im Einzelfall kann die erfindungsgemässe Armauflage entweder als separates Einzelteil hergestellt werden, welches dann bei der Montage des Verkleidungsteiles mit diesem verbunden wird, oder aber im Falle einer in die Verideidung integrierten Armauflage direkt bei der Herstellung des Trägerteiles hierfür berücksichtigt werden.

Die Erfindung wird im folgenden anhand der Zeichnung näher erläutert werden, die zeigen:

- Figur 1 einen schematischen Schnitt durch eine Kraftfahrzeugtür mit einer Armlehne oder Armauflage als einer beispielhaften Ausführungsform der Erfindung,

- Figur 2 einen vergrösserten Bereich A der Figur 1 mit einem Ausschnitt aus der Armauflage mit der Stufe im Träger zeigt,

- Figur 3 der in der Figur 2 gezeigte Bereich, jedoch in einem deformierten Zustand nach einem Aufprall auf die Kraftfahrzeugtür von außen.

Die Erfindung wird beispielhaft in ihrer Anwendung auf eine Fahrzeugtür eines Kraftfahrzeuges beschrieben. Generell ist die Erfindung für stossabsorbierende Verkleidungsteile für den Innenraum von Kraftfahrzeugen vorgesehen, die Aufprallenergie verzehren sollen. Die Erfindung kann beispielsweise auf entsprechende feststehende Seitenteile oder sonstige Innenausstattungsteile oder sonstige Karosserieteile angewendet werden, bei denen die erfindungsgemäße Funktionsweise erreicht werden soll.

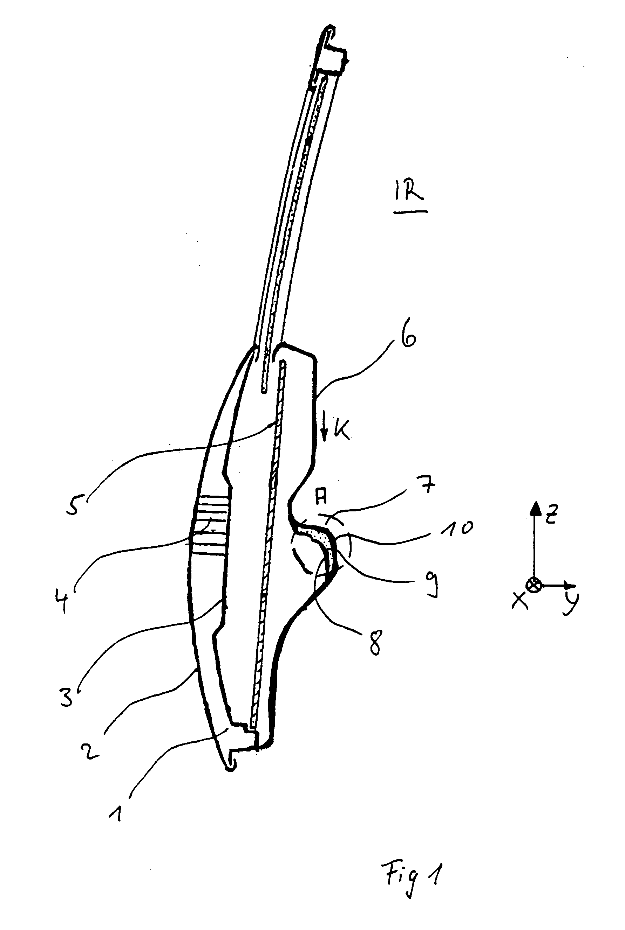

Die Figur 1 zeigt einen schematischen Schnitt durch eine als Anwendungsfall für die Erfindung in Betracht kommende Kraftfahrzeugtür mit einer der Umgebung des Kraftfahrzeuges zugewandten Aussenseite 1, die beispielsweise aus einem Aussenblech 2 und einem Innenblech 3 gebildet wird. In der Aussenseite 1 ist zwischen den beiden Blechen ein üblicherweise angeordnetes Seitenaufprall-Verstärkungsteil 4 dargestellt. An der Kraftfahrzeugtürseite, die entgegengesetzt zu ihrer Aussenseite 1 gelegen ist, ist eine Innenverkleidung 6 vorgesehen, deren Oberfläche also dem Innenraum des Kraftfahrzeuges zugewandt ist. Zwischen der Innenverkleidung 6 und der Aussenseite 1 befindet sich ein Modulträger als Trageplatte für in dieser Darstellung nicht gezeichneten Funktionsteile wie Fensterheber, Schloss, Lautsprecher und andere.

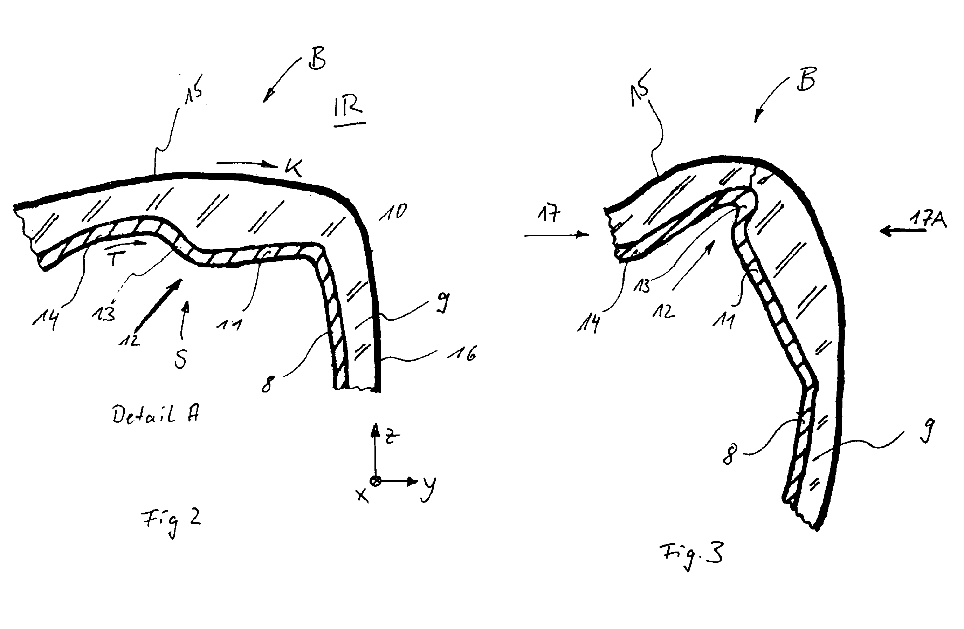

Zur Orientierung ist in den Figuren 1 und 2 ein Fahrzeug-bezogenes Koordinationsystem eingetragen mit einer in der vorgesehenen Fahrtrichtung verlaufenden Fahrzeug-Längsrichtung X, einer Quer- oder Breiten-Richtung Y und einer nach oben verlaufenden vertikalen oder Höhen-Richtung oder Fahrzeug-Hochachse Z. In bezug auf die Innenverkleidung ist eine Richtung R angegeben, die im wesentlichen entgegen der Höhen-Richtung Z verläuft und der Kontur der Innenverkleidung bzw. einer Schicht derselben folgt. Die demnach ortsabhängige Richtung R wird deshalb im folgenden als Kontur-Richtung K der Innenverkleidung in bezug auf den entgegen der Fahrzeug-Hochachse Z gerichteten Konturverlauf bezeichnet. Die Richtung Y gibt in etwa die Richtung an, in der in etwa auch eine erfindungsgemäß angenommene Aufprall-Kraft wirken kann. Die angenommene Aufprall-Kraft wirkt in einem bestimmten Winkelbereich, der sich ausgehend von der horizontalen Richtung Y in beide vertikalen Richtungen erstreckt.

Die Innenverkleidung 6 umfaßt einen sich zumindest über einen Teil ihrer Kontur-Richtung R erstreckenden Bereich B, der unter einer vorbestimmten äußeren Einwirkung eine vorbestimmte Verformung erfährt und der aus einer Träger-Schicht 8, einer Schaum-Schicht 9, einer oberen Schicht oder Annauflage-Schicht oder Armauflage 7 und je nach Anwendungsfall gegebenenfalls auch einer zum Innenraum des Kraftfahrzeuges oder zum Fahrgast hin weisenden Dekor-Schicht 10 aufgebaut ist, wobei die obere Schicht auch die Dekorschicht sein kann. Die Reihenfolge der angegebenen Schichten ergibt sich bei einer Betrachtung des Aufbaus in der Richtung vom Inneren des Karosserieteils oder der Fahrzeugtür hin zum Innenraum IR des Fahrzeugs. Es können zwischen diesen Schichten auch weitere Schichten wie z.B. Klebeschichten angeordnet sein. Analog zur Kontur-Richtung K ist in der Figur 2 eine ebenfalls ortsabhängige Trägerschicht-Richtung T im wesentlichen entgegen der Hochachse Z eingetragen.

Ein Ausschnitt A der in der Figur 1 gezeigten Armauflage als Beispiel der erfindungsgemäßen Innenverkleidung ist in den Figuren 2 und 3 vergrössert dargestellt. Die ortsabhängigen Kontur-Richtungen K und die Trägerschicht-Richtungen T des Bereichs B verlaufen in bezug auf die Aufprallrichtung 17 derart, daß sich bei der angenommenen äußeren Kraft 17 eine erfindungsgemäße Knickbewegung oder Winkelveränderung von entsprechenden Abschnitten der Träger-Schicht 8 ergibt. Die Kontur-Richtungen K und die Trägerschicht-Richtungen T des Bereichs B der Innenverkleidung 6 verlaufen demnach in einem vorgegebenen Winkelbereich zu einer Richtung 17 einer angenommenen Kraft aufgrund eines Aufpralls von außen.

Im folgenden wird der Abschnitt der oberen Schicht 7 als oberer Verformungs-Abschnitt oder erster Abschnitt 15 bezeichnet, der insbesondere mit einem in dessen Verlängerung in der Kontur-Richtung K gelegenen Stütz- oder zweiten Abschnitt 16 zusammenwirken kann. Die Kontur-Richtungen K und Trägerschicht-Richtungen T eines solchen Stütz-Abschnitts 16 verlaufen deshalb vorzugsweise in einer Winkeldifferenz zu den Richtungen K bzw. T des Verformungs-Abschnitts 15. In der Darstellung der Figuren 2 und 3 verläuft der Verformungs-Abschnitt oder erste Abschnitt 15 in seinen Kontur-Richtungen K und Trägerschicht-Richtungen T zum Fahrzeug-Innenraum IR hin, so daß der Verformungs-Abschnitt 15 bei dem Ausführungsbeispiel einer Annlehne aus einer angenommenen Fahrersicht von oben betrachtet werden kann. Der zweite Abschnitt 16 verläuft vom ersten oberen Abschnitt aus gesehen in der Blickrichtung eines angenommenen Fahrers. Deshalb kann im dargestellten Ausführungsbeispiel der Verformungs-Abschnitt 15 auch als Oberseite und der zweite Abschnitt 16 auch als Unterseite angesehen werden.

Vom Fahrzeug-Innenraum IR aus gesehen ist die Träger-Schicht 8 jenseits der Schaum-Schicht 9 gelegen. Die Träger-Schicht 8 weist im Verlauf in den Trägerschicht-Richtungen T gesehen in seinem unverformten Zustand einen S-förmigen oder kurvenförmigen oder stufenförmigen oder absatzförmigen Verlauf auf. Dieser Träger-Abschnitt, der im folgenden Verformungs-Abschnitt genannt wird, wird in der Figur 2 mit dem Bezugszeichen S bezeichnet. Bei einem kurvenförmigen Verlauf der Träger-Schicht 8 im Verformungs-Abschnitt S umfaßt die Träger-Schicht 8 zwei entgegengesetzt zueinander orientierte Krümmungen auf, wodurch der Verlauf der Träger-Schicht 8 in dem Abschnitt S mindestens eine Triggerstelle in Form eines Wendepunktes aufweist. Der Verformungs-Abschnitt S weist mindestens eine Triggerstelle oder einen Wendepunkt 12 der im Verformungs-Abschnitt in der Träger-Schicht 8 vorgesehenen Krümmungen auf.

Vorzugsweise umfaßt der Verformungs-Abschnitt S eine Stufenflanke 13, die bei einer stufenförmigen Ausbildung des Verformungs-Abschnitts S in seinem unverformten Zustand vorzugsweise im wesentlichen geradlinig bzw. eben gestaltet ist und bei einem kurvenförmigen Verlauf des Verformungs-Abschnitts S geradlinig oder ebenfalls kurvenförmig gestaltet sein kann. Die erfindungsgemäße Triggerstelle aufgrund der erfindungsgemäßen Funktionsweise ein Bereich der Stufenflanke 13, in dem die aufgrund der angenommenen Krafteinwirkung 17 vorgesehene Falt- oder Knick-Bewegung der Träger-Schicht erfolgt. Im Bereich der Triggerstelle 12 ist also eine nach der Verformung auftretende Falt- oder Knick-Linie nach der Falt- oder Knick-Bewegung gelegen. Die Triggerstelle 12 ist zwischen einem aus Sicht des Innenraums IR äusseren Verformungsteil 14 und einem inneren Verformungsteil 11 gelegen. Im Fall der in den Figuren 1 bis 3 dargestellten Armlehne kann das äussere Verformungsteil 14 auch als Stufenoberteil und das innere Stufenteil 11 auch als Stufenunterteil angesehen werden. Von dem äusseren Verformungsteil 14 aus kann - wie es in der Figur 2 dargestellt ist - die Träger-Schicht 8 in der Trägerschicht-Richtung T eine Rechtskrümmung und nach der Triggerstelle 12 eine Linkskrümmung vollziehen. Es kann jedoch auch umgekehrt zunächst eine Linkskrümmung und nach der Triggerstelle 12 eine Linkskrümmung vorgesehen sein.

Es können auch mehrere Verformungs-Abschnitte S im Bereich des oberen Verformungs-Abschnittes 15 angeordnet sein. Auch an einem anschließenden zweiten oberen Abschnitt 16 kann zusätzlich zumindest ein Verformungs-Abschnitt S angeordnet sein.

Die Stufenflanke kann entlang der Trägerschicht-Richtung T gekrümmt (vgl. Figur 2) oder gerade verlaufen oder ganz entfallen. Zumindest im letzteren Fall findet im Bereich oder in der Nähe der Triggerstelle 12 ein Krümmungswechse statt. Im Bereich der Triggerstelle 12 kann eine Kerbe oder Nut (nicht gezeigt) oder können mehrere Kerben oder Nuten in der Träger-Schicht 8 eingebracht sein. Diese können die erfindungsgemäß vorgesehene Wirkung verbessern, jedoch sind diese für die erfindungsgemässe Verformung nicht notwendig. Bei einem Vorsehen derselben sind diese gestaltet, dass ein Abreissen während der Verfomung nicht stattfindet.

Auf der Seite des Fahrzeug-Inneren IR kann die Innenverkleidung 6 auf ihrer Oberseite die obere Schicht 7 oder die Dekorschicht 10 aufweisen. Die Dekorschicht kann aus Leder, Kunstleder, Kunststoff-Folie oder einem textilen Bezug gebildet sein.

Vorzugsweise füllt die Schaum-Schicht 9 den Bereich zwischen dem Verformungs-Abschnitt 15 der oberen Schicht 7 bzw. der Dekorschicht 10 und der Träger-Schicht 8 aus. Die Schaum-Schicht 9 ist vorzugsweise aus einem Kunststoffschaum wie z. B. aus Polyurethan, Polypropylen oder Polystyrol oder Kombinationen von diesen gebildet, wobei eine geeignete Elastizität zur Einstellung einer geforderten Haptik vorgesehen ist.

Figur 3 zeigt einen Armlauflagen-Ausschnitt nach Figur 2 nach einer Krafteinwirkung in Richtung des Pfeiles 17. Die eingekoppelte Kraft oder die von dem Insassen-Körper oder einem Transportgut verursachte Gegenkraft 17A, die bei dem Anlegen der Innenverkleidung an demselben entsteht, wird im Bereich der Triggerstelle 12 in Komponenten aufgeteilt, die nach oben, in Richtung des ersten Abschnitts 15 der Armauflage wirken und in Komponenten, die in etwa in der ursprünglichen Richtung des Pfeiles 17 wirken. Auf Grund dieser Kraftaufteilungen kommt es zu Verformung der Träger-Schicht 8. Das hintere oder innere Verformungsteil 11 wandert unter das vordere oder äußere Verformungsteil 14, wobei die Stufenflanke 13 ihre Neigung verändert. Die Kraftkomponente nach oben in Richtung des ersten Abschnitts 15 bewirkt, dass das vordere oder äußere Verformungsteil 14 und das dazu ursprünglich annähemd, jedoch nicht notwendigerweise parallel verlaufenden hinteren oder inneren Stufenteils 11 über die Triggerstelle 12 oder die Stufenflanke 13 in die vertikale Richtung Z gebogen werden. Dadurch verkleinert sich der von dem vorderen oder äußeren 14 und dem hinteren oder inneren 11 Verformungsteil aufgespannte Winkel. Die so hervorgerufene bleibende Deformation der Träger-Schicht 8, und damit der gesamten Armlehne, verzehrt Aufprallenergie. Die aufgrund einer äußeren Krafteinwirkung 17 und der daraus entstehenden Verformung der Deformation der Innenverkleidung bei einem Auftreffen derselben auf den Oberkörper des Fahrzeuginsassen oder ein Transportgut oder eines anderen Bestandteils im Fahrzeug-Innenraum IR bewirkt durch die erfindungsgemäße Verformung eine Maximalkraft in einem vorgegebenen Verformungsbereich der Innenverkleidung im Abschnitt S.

Beispielsweise beleibt bei der erfindungsgemäßen Innenverkleidung 6 hervorgerufen durch das Auftreffen einer aus der Innenverkleidung hervorstehenden Armauflage aufgrund einer in der Norm Euro-NCAP festgelegten Krafteinwirkung die zwischen einem Insassen im Inenraum IR und der Innenverkleidung wirkende Kraft unter dem gesetzten Grenzwert von 1000 N bei einer Deformation oder Verkürzung der Armlehne in der Kontur-Richtung K um einen Betrag von 20 mm bis 30 mm.

Bei dem erfindungsgemäßen Effekt verkleinert sich also der von dem vorderen 14 und dem hinteren 11 Verformungsteil aufgespannte Winkel. Dabei wandert das innere Stufenteil in bezug auf die vertikale Richtung Z nach oben oder unten, je nachdem wie der Verformungs-Abschnitt S der Träger-Schicht 8 gestaltet ist. Diese Verformung kann auch als durch das innere 11 und äußere 14 Verformungsteil vollzogene Falt- oder Knick-Bewegung angesehen werden.

Die Träger-Schicht 8 ist aus einem Material gebildet, das sowohl die erforderliche Stabilität als auch die für die Verformung notwendige Zähigkeit aufweist, und ist in bekannter Weise in die gewünschte Kontur gepresst. Die Zähigkeit der Träger-Schicht 8 ist derart vorgesehen, daß bei einem angenommenen Aufprall keine zu große Verformungsarbeit erforderlich ist, um den erfindungsgemäßen Effekt in bezug auf den inneren und äußeren Verformungsteil zu erreichen. Andererseits muß jedoch auch eine Mindest-Verformungsarbeit erforderlich sein, um diesen erfindungsgemäßen Effekt zu erzeugen. Um diesen Anforderungen gerecht zu werden, ist für das Material der Träger-Schicht 8 eine Dichte vorzugsweise im Bereich von 0,5 bis $0,7 \frac{g}{cm^3}$ und eine Dicke der Träger-Schicht 8 zwischen 1,8 mm und 2,0 mm vorgesehen. Zwischen dem äußeren Verformungsteil 14 und dem inneren Verformungsteil 11 ist ein senkrecht zur angenommenen Kraftrichtung 17 verlaufender Abstand zwischen 7 und 9 mm und vorzugsweise um 8 mm vorgesehen. In einem bevorzugten Ausführungsbeispiel beträgt dieser Abstand zwischen 8 und 8,5 mm. Bei einem gekrümmten Verlauf des äußeren Verformungsteils 14 und des inneren Verformungsteils 11 können als Bezugslinien für diese Maße die Mittel- oder Schwerpunkt-Linie des jeweiligen Verformungsteils 11, 14 verwendet werden.

Für den Fall, daß zwischen dem vorderen Stufenteil 14 und dem hinteren Stufenteil 11 eine gekrümmte oder ebene Stufenflanke 12 angeordnet ist, verläuft diese in bezug auf das hintere Stufenteil 11 vorzugsweise zwischen 70° und 85° und insbesondere bei etwa 75°. Bei einer gekrümmten Stufenflanke 13 bestimmt sich der Verlauf oder der genannte Winkel aus der Tangente an den Punkt des Krümmungswechsels.

Für die Träger-Schicht 8 ist ein Material geeignet, das zur Erzielung des erfindungsgemäßen Effekts sowohl die erforderliche Stabilität als auch die für die Verformung notwendige Zähigkeit aufweist. Dabei ist ein Material vorgesehen, das aus Polyesterfasern und / oder aus beleimten Holzfasern gebildet wird. Vorzugsweise ist in dem Material für die Träger-Schicht 8 ein Anteil an Polyesterfasern von 20 bis 25 Gew.-% und für die Holzfasern ein Anteil von 80 bis 75 Gew.-% vorgesehen. Für die Holzfasern kommen insbesondere Fasern aus Fichten-, Kiefern- oder Pinien-Holz in Betracht, wobei in einer besonderen Ausführungsform eine Faserlänge von 0,1 bis 2 cm gewählt wird. Vorteilhafterweise sind die Fasern mit Bindemitteln behandelt oder besprizt oder aufgrund dieser Behandlung wenigestens zum Teil beschichtet. Als Bindemittel wird vorzugsweise ein thermisch vernetzbares Acrylat-Harz verwendet. Dabei kann insbesondere eine Menge an diesem Acrylat-Harz verwendet verwendet werden, die 10 bis 15 Gewichts-% bezogen auf die verwendet Menge an Holzfasern entspricht. Dieses Material besitzt die erforderliche Formbeständigkeit für die Armauflage sowie entsprechende Zähigkeit für die Verformungsarbeit im geforderten Temperaturbereichen zwischen -40 Grad C und +90 Grad C ohne hierin zu verspröden und zu splittern oder bei hohen Temperaturen zu stark zu erweichen.

Zur Herstellung der Träger-Schicht 8 kann das voranstehend bezeichnete Material zu einem Halbzeug in Form von Matten verarbeitet werden, die anschließend in die vorgesehene Trägerschicht-Form verpreßt werden. Bei diesem Pressvorgang wird die mindestens eine Triggerstelle 12 mit der Stufenflanke 13 zwischen den Stufenteilen 11 und 14 eingepresst.

Trifft im Falle der Türverformung infolge eines Seitenaufpralls die Armauflage auf den Körper, so beginnt eine Krafteinleitung in die Armlehne über Dekorschicht und Schaum in den Träger. Im Bereich der Triggerstelle wird der Kraftverlauf im Träger aufgeteilt in Kraftkomponenten, die weiter in der ursprünglichen Richtung wirken und Kraftkomponenten, die nach oben wirken. Das Trägerteil verformt sich derart, dass das Stufenunterteil unter das Stufenoberteil wandert. Auf Grund der nach oben wirkenden Kraftkomponente im Bereich der Triggerstelle wird die Oberseite der Armauflage dort nach oben gefaltet. Die Armauflage verbiegt sich in Richtung der weichen Kaschierung, wobei eine nennenswerte Eindrückung der Schaumschicht nicht erfolgt. Der aus der Türinnenseite hervorstehende Teil der Armauflage wird um 20 mm bis 30 mm verkürzt. Auf Grund der bleibenden Deformation der Armauflage wird Energie verzehrt. Die Kraft auf den Oberkörper des Fahrzeuginsassen bleibt unter dem Grenzwert von 1000 N.

Aus den Figuren 1 bis 3 und insbesondere aus der Figur 1 ist ersichtlich, das die erfindungsgemäße stossabsorbierende Verkleidungsteil nicht an einer Kraftfahrzeugtür vorgesehen sein muß, sondern an der Innenseite eines beliebigen Karosserieteils angeordnet sein kann, um eine gegebenfalls auftretende Aufprallenergie aufzubrauchen oder zu verzehren. Das stossabsorbierende Verkleidungsteil kann auch zum Schutz von Transportgütem verwendet werden.

## Bezugszeichenliste

1 Aussenseite

2 Aussenblech

3 Innenblech

4 Verstärkungsprofil

5 Modulträger

6 Innenseite

7 Armauflage

8 Träger

9 Schaum

10 Dekorschicht

11 Inneres Verformungsteil oder Stufenunterteil

12 Triggerstelle

13 Stufenflanke

14 Äußeres Verformungsteil oder Stufenoberteil

15 Erster Abschnitt des Bereichs B oder Oberteil der Armauflage

16 Zweiter Abschnitt des Bereichs B oder Flanke der Armauflage

17 Richtung einer angenommenen äußeren Kraft
17A Richtung einer aufgrund der angenommenen äußeren Kraft 17 verursachte Gegenkraft

K Verlauf der Konturlinie der Innenverkleidung 6

T Verlauf der Trägerschicht 8

X Fahrzeug-Längsrichtung

Y Horizontale Richtung des Fahrzeugs

Z Vertikale Richtung oder Hoch-Achse

## Patentansprüche

1. Verkleidungsteil (6) zur Anordnung an der dem Innenraum (IR) zugewandten Seite eines Karosserieteils eines Kraftfahrzeugs mit mindestens einem bei der Einwirkung einer äußeren Kraft (Richtung 17) verformbaren Abschnitt (15), der aus einer Träger-Schicht (8), einer Schaumschicht (9) und einer oberen Schicht (7) gebildet ist, um beim Übergang in einen deformierten Zustand Stossenergie zu absorbieren, wobei die Träger-Schicht (8) im Bereich des verformbaren Abschnitts (15) aus einem in Bezug auf den Innenraum (IR) gesehen äußeren Verformungsabschnitt (14), einem inneren Verformungsabschnitt (11) und einer zwischen diesen gelegenen Schrägflanke (13) gebildet ist, **dadurch gekennzeichnet, dass** die obere Schicht (7) im verformbaren Abschnitt (15) derart verläuft, dass sich der Querschnitt der Schaumschicht (9) vom äußeren Verformungsabschnitt (14) zum inneren Verformungsabschnitt (11) vergrößert oder verkleinert.

2. Verkleidungsteil (6) zur Anordnung an der dem Innenraum (IR) zugewandten Seite eines Karosserieteils eines Kraftfahrzeugs nach dem Anspruch 1, **dadurch gekennzeichnet, dass** die zwischen dem äußeren Verformungsabschnitt (14) und dem inneren Verformungsabschnitt (11) gelegene Stufenflanke (13) in einem Winkelbereich zwischen 70 und 85 Grad in Bezug auf den inneren Verformungsabschnitt (11) verläuft.

3. Verkleidungsteil (6) zur Anordnung an der dem Innenraum (IR) zugewandten Seite eines Karosserieteils eines Kraftfahrzeugs nach dem Anspruch 1 oder 2, **dadurch gekennzeichnet, dass** die Träger-Schicht (8) im Bereich der Stufenflanke (13), des äußeren Verformungsteils (14) und des inneren Verformungsteils (11) kurvenförmig ausgebildet ist.

**4.** Verkleidungsteil (6) zur Anordnung an der dem Innenraum (IR) zugewandten Seite eines Karosserieteils eines Kraftfahrzeugs nach dem Anspruch 1, 2 oder 3, **dadurch gekennzeichnet, dass** zwischen dem äußeren Verformungsteil (14) und dem inneren Verformungsteil (11) ein senkrecht zur angenommenen Kraftrichtung (17) verlaufender Abstand zwischen 7 und 9 mm vorgesehen ist.

**5.** Verkleidungsteil (6) zur Anordnung an der dem Innenraum (IR) zugewandten Seite eines Karosserieteils eines Kraftfahrzeugs nach dem Anspruch 4, **dadurch gekennzeichnet, dass** in Bezug auf den Abstand bei einem gekrümmten Verlauf des äußeren Verformungsteils (14) und des inneren Verformungsteils (11) die Mittel- oder Schwerpunkte-Linie des jeweiligen Verformungsteils (11, 14) verwendet wird.

**6.** Verkleidungsteil (6) zur Anordnung an der dem Innenraum (IR) zugewandten Seite eines Karosserieteils eines Kraftfahrzeugs nach einem der voranstehenden Ansprüche, **dadurch gekennzeichnet, dass** für das Material der Träger-Schicht (8) eine Dichte vorzugsweise im Bereich von 0,5 bis

$$0,7 \ \frac{g}{cm^3}$$ und dass für die Träger-Schicht (8) eine Dicke im Bereich zwischen 1,8 mm und 2,0 mm vorgesehen ist.

**7.** Verkleidungsteil (6) zur Anordnung an der dem Innenraum (IR) zugewandten Seite eines Karosserieteils eines Kraftfahrzeugs nach einem der voranstehenden Ansprüche, **dadurch gekennzeichnet, dass** die Träger-Schicht (8) aus Holzfasern gebildet wird.

**8.** Verkleidungsteil (6) zur Anordnung an der dem Innenraum (IR) zugewandten Seite eines Karosserieteils eines Kraftfahrzeugs nach einem der voranstehenden Ansprüche 1 bis 6, **dadurch gekennzeichnet, dass** die Träger-Schicht (8) aus Polyesterfasern und aus beleimten Holzfasern gebildet wird.

**9.** Verkleidungsteil (6) zur Anordnung an der dem Innenraum (IR) zugewandten Seite eines Karosserieteils eines Kraftfahrzeugs nach dem Anspruch 8, **dadurch gekennzeichnet, dass** die Polyesterfasern mit einem Anteil von 20 bis 25 Gewichts-% und die Holzfasern mit einem Anteil von 80 bis 75 Gewichts-% vorgesehen sind.

**10.** Verkleidungsteil (6) zur Anordnung an der dem Innenraum (IR) zugewandten Seite eines Karosserieteils eines Kraftfahrzeugs nach einem der voranstehenden Ansprüche 7 bis 9, **dadurch gekennzeichnet, dass** für die Holzfasern Fasern aus Fichten-, Kiefern- oder Pinien-Holz verwendet werden.

**11.** Verkleidungsteil (6) zur Anordnung an der dem Innenraum (IR) zugewandten Seite eines Karosserieteils eines Kraftfahrzeugs nach einem der voranstehenden Ansprüche 7 bis 10, **dadurch gekennzeichnet, dass** für die Holzfasern eine Faserlänge von 0,1 bis 2 cm gewählt wird.

**12.** Verkleidungsteil (6) zur Anordnung an der dem Innenraum (IR) zugewandten Seite eines Karosserieteils eines Kraftfahrzeugs nach einem der Ansprüche 7 bis 11, **dadurch gekennzeichnet, dass** die Fasern mit Bindemitteln versehen sind, wobei ein thermisch vernetzbares Acrylat-Harz verwendet wird.

**13.** Verkleidungsteil (6) zur Anordnung an der dem Innenraum (IR) zugewandten Seite eines Karosserieteils eines Kraftfahrzeugs nach dem Anspruch 12, **dadurch gekennzeichnet, dass** das Acrylat-Harz mit einem Anteil von 10 bis 15 Gewichts-% bezogen auf die verwendet Menge an Holzfasern verwendet wird.

**Claims**

**1.** Lining element (6) for arranging on the side of a vehicle chassis part facing the interior (IR) with at least one section (15) being deformable due to the effect of an external force (direction 17) which is formed by a support layer (8), a foam layer (9) and an upper layer (7) in order to absorb impact energy by transforming into a deformed state, wherein in the region of the deformation section (15) the support layer (8) comprises, viewed from the interior (IR), an outer deformation part (14), an inner deformation part (11), and an angled leg (13),
**characterized in that**
the upper layer (7) in the deformable section (1) is running in a way that the cross section of the foam layer (9) increases or decreases from the outer deformation part (14) to the inner deformation part (11).

**2.** Lining element (6) for arranging on the side of a vehicle chassis part facing the interior (IR) according to claim 1, **characterized in that** the angled leg (13) lying between the outer deformation part (14) and the inner deformation part (11) is running within a range of angles between 70 and 85 degrees relative to the inner deformation part (11).

**3.** Lining element (6) for arranging on the side of a vehicle chassis part facing the interior (IR) according to claim 1 or 2, **characterized in that** the support layer (8) in the region of the angled leg (13), the outer deformation part (14) and the inner deformation part (11) is curved.

4. Lining element (6) for arranging on the side of a vehicle chassis part facing the interior (IR) according to claims 1, 2 or 3, **characterized in that** between the outer deformation part (14) and the inner deformation part (11) a distance is provided running perpendicular to the assumed force direction (17) between 7 and 9 mm.

5. Lining element (6) for arranging on the side of a vehicle chassis part facing the interior (IR) according to claim 4, **characterized in that** when the outer deformation part (14) and the inner deformation part (11) being curved, the distance is determined by using the center line or the center of the corresponding deformation part (11, 14).

6. Lining element (6) for arranging on the side of a vehicle chassis part facing the interior (IR) according to one of the preceding claims, **characterized in that** the material of the support layer (8) has a density preferably in the range of 0.5-0.7 g/cm$^3$, and **in that** the support layer (8) has a thickness between 1.8 mm and 2.0 mm.

7. Lining element (6) for arranging on the side of a vehicle chassis part facing the interior (IR) according to one of the preceding claims, **characterized in that** the support layer (8) is formed from wood fibres.

8. Lining element (6) for arranging on the side of a vehicle chassis part facing the interior (IR) according to one of the preceding claims 1 to 6, **characterized in that** the support layer (8) is formed from polyester fibres and from glued wood fibres.

9. Lining element (6) for arranging on the side of a vehicle chassis part facing the interior (IR) according to claim 8, **characterized in that** the polyester fibres are provided with 20-25 wt% and the wood fibres are provided with 80-75 wt%.

10. Lining element (6) for arranging on the side of a vehicle chassis part facing the interior (IR) according to one of the preceding claims 7 to 9, **characterized in that** fibres from spruce, fir, or pine wood are used as wood fibres.

11. Lining element (6) for arranging on the side of a vehicle chassis part facing the interior (IR) according to one of the preceding claims 7 to 10, **characterized in that** the wood fibres have a fibre length of 0.1-0.2 cm.

12. Lining element (6) for arranging on the side of a vehicle chassis part facing the interior (IR) according to one of the preceding claims 7 to 11, **characterized in that** the fibres are treated with binding agents wherein a thermally cross-linkable acrylate resin is used.

13. Lining element (6) for arranging on the side of a vehicle chassis part facing the interior (IR) according to claims 12, **characterized in that** the acrylate resin has an amount of 10-15 wt% relative to the amount of wood fibres.

**Revendications**

1. Elément d'habillage (6) destiné à être monté sur la face tournée vers l'intérieur (IR) d'un élément de carrosserie d'un véhicule automobile, comportant au moins une portion (15) déformable sous l'action d'une force extérieure (direction 17), qui est constituée d'une couche support (8), d'une couche de mousse (9) et d'une couche supérieure (7) pour absorber l'énergie de choc lors du passage à un état déformé, la couche support (8) dans la zone de la portion déformable (15) étant formée d'une partie de déformation extérieure (14), vue de l'intérieur (IR), d'une partie de déformation intérieure (11) et d'un flanc oblique (13) disposé entre celles-ci.
**caractérisé en ce que**
la couche supérieure (7) dans la portion déformable (15) s'étend de sorte que la section transversale de la couche de mousse (9) augmente ou diminue depuis la partie de déformation extérieure (14) vers la partie de déformation intérieure (11).

2. Elément d'habillage (6) destiné à être monté sur la face tournée vers l'intérieur (IR) d'un élément de carrosserie d'un véhicule automobile selon la revendication 1, **caractérisé en ce que** le flanc en gradin (13) disposé entre la partie de déformation extérieure (14) et la partie de déformation intérieure (11) s'étend dans une plage angulaire comprise entre 70 et 85 degrés par rapport à la partie de déformation intérieure (11).

3. Elément d'habillage (6) destiné à être monté sur la face tournée vers l'intérieur (IR) d'un élément de carrosserie d'un véhicule automobile selon la revendication 1 ou 2, **caractérisé en ce que** la couche support (8) dans la zone du flanc en gradin (13), de la partie de déformation extérieure (14) et de la partie de déformation intérieure (11) est réalisée sous forme recourbée.

4. Elément d'habillage (6) destiné à être monté sur la face tournée vers l'intérieur (IR) d'un élément de carrosserie d'un véhicule automobile selon la revendication 1, 2 ou 3, **caractérisé en ce que**, entre la partie de déformation extérieure (14) et la partie de déformation intérieure (11), est prévu un intervalle de 7 à 9 mm s'étendant dans le sens perpendiculaire à la direction (17) supposée de la force.

**5.** Elément d'habillage (6) destiné à être monté sur la face tournée vers l'intérieur (IR) d'un élément de carrosserie d'un véhicule automobile selon la revendication 4, **caractérisé en ce que**, pour ce qui est de l'intervalle dans le cas d'une forme recourbée de la partie de déformation extérieure (14) et de la partie de déformation intérieure (11), est utilisée la ligne médiane ou des centres de gravité de chaque partie de déformation (11, 14).

**6.** Elément d'habillage (6) destiné à être monté sur la face tournée vers l'intérieur (IR) d'un élément de carrosserie d'un véhicule automobile selon l'une des revendications précédentes, **caractérisé en ce que**, pour le matériau de la couche support (8), est prévue une densité de préférence dans la plage de

$$0{,}5 \text{ à } 0{,}7 \quad \frac{g}{cm^3}$$ et que pour la couche support (8) est prévue une épaisseur dans la plage comprise entre 1,8 mm et 2,0 mm.

**7.** Elément d'habillage (6) destiné à être monté sur la face tournée vers l'intérieur (IR) d'un élément de carrosserie d'un véhicule automobile selon l'une des revendications précédentes, **caractérisé en ce que** la couche support (8) est réalisée en fibres de bois.

**8.** Elément d'habillage (6) destiné à être monté sur la face tournée vers l'intérieur (IR) d'un élément de carrosserie d'un véhicule automobile selon l'une des revendications précédentes 1 à 6, **caractérisé en ce que** la couche support (8) est réalisée en fibres de polyester et en fibres de bois encollées.

**9.** Elément d'habillage (6) destiné à être monté sur la face tournée vers l'intérieur (IR) d'un élément de carrosserie d'un véhicule automobile selon la revendication 8, **caractérisé en ce que** les fibres de polyester sont prévues dans une proportion de 20 à 25 % en poids et les fibres de bois dans une proportion 80 à 75 % en poids.

**10.** Elément d'habillage (6) destiné à être monté sur la face tournée vers l'intérieur (IR) d'un élément de carrosserie d'un véhicule automobile selon l'une des revendications précédentes 7 à 9, **caractérisé en ce que**, pour les fibres de bois sont utilisées des fibres de bois de sapin, de pin sylvestre et de pin pignon.

**11.** Elément d'habillage (6) destiné à être monté sur la face tournée vers l'intérieur (IR) d'un élément de carrosserie d'un véhicule automobile selon l'une des revendications précédentes 7 à 10, **caractérisé en ce que** pour les fibres de bois est choisie une longueur de fibres de 0,1 à 2 cm.

**12.** Elément d'habillage (6) destiné à être monté sur la face tournée vers l'intérieur (IR) d'un élément de carrosserie d'un véhicule automobile selon l'une des revendications 7 à 11, **caractérisé en ce que** les fibres sont pourvues de liants, une résine acrylate réticulable thermiquement étant utilisée.

**13.** Elément d'habillage (6) destiné à être monté sur la face tournée vers l'intérieur (IR) d'un élément de carrosserie d'un véhicule automobile selon la revendication 12, **caractérisé en ce que** la résine acrylate est utilisée dans une proportion 10 à 15% en poids par rapport à la quantité de fibres de bois utilisée.

Fig 1